# EUROPÄISCHE PATENTANMELDUNG

(11) **EP 2 135 891 A2**
(43) Veröffentlichungstag der Anmeldung: **23.12.2009**
(21) Anmeldenummer: 09161420.6
(22) Anmeldetag: 28.05.2009
(51) Int. Cl.: C08G 69/26, C08G 69/28

(54) **Polyamid und Verfahren zu dessen Herstellung**

(30) Priorität: 28.05.2008 DE 102008025029
(71) Anmelder: Fraunhofer-Gesellschaft zur Förderung der angewandten Forschung e.V., 80686 München (DE)
(72) Erfinder: Bechthold, Inna, 46049, Oberhausen (DE)
(74) Vertreter: Epping - Hermann - Fischer

(57) **Zusammenfassung**

Die Erfindung betrifft ein Verfahren zur Herstellung von Polyamiden, insbesondere Polyamid 44, die Einheiten der Struktur -CO-(CH₂)₂-CO- und der Struktur -NH-(CH₂)₄-NH- enthalten. Hierbei werden ein Dicarbonsäureester der Bernsteinsäure, 0-0,25 Moläquivalenten (bezogen auf den Dicarbonsäureester der Bernsteinsäure) eines weiteren Dicarbonsäureesters und das Diamins NH₂-(CH₂)₄-NH₂ zunächst einer ersten Kondensationsreaktion bei einer Temperatur von 100-200 °C unterworfen, wobei ein Präpolymer erhalten wird. Anschließend wird eine zweite Kondensationsreaktion des Präpolymers unter Abwesenheit von Sauerstoff bei einer Temperatur von 160 °C - 240 °C und bei einem Druck < 1 bar durchgeführt.

## Beschreibung

Die Erfindung betrifft ein Verfahren zur Herstellen von Polyamiden, die Einheiten der Struktur-CO-(CH₂)₂-CO und der Struktur-NH-(CH₂)₄-NH- enthalten und ein mit diesem Verfahren hergestelltes Polyamid.

Nach dem Stand der Technik erfolgt die Herstellung von Polyamiden üblicherweise mittels Polykondensation von aliphatischen Diaminen und aliphatischen Dicarbonsäuren oder mittels einer Polyaddition von Lactamen. Die industrielle Herstellung von Polyamiden auf Basis von Alkylen-Dicarbonsäuren und Alkylen-Diaminen erfolgt üblicherweise mittels diskontinuierlicher oder kontinuierlicher Polykondensation zum Beispiel des so genannten Nylon-Salzes.

Bei Polykondensationen aus einem Nylon-Salz aus aliphatischen Diaminen und aliphatischen Dicarbonsäuren treten jedoch sehr häufig Nebenreaktionen auf, die die Eigenschaft der gebildeten Polymere stark beeinflussen. Insbesondere sind hierbei die Bildung von zyklischen Endgruppen, Zersetzungsreaktionen während der Herstellung und eine erschwerte stöchiometrische Kontrolle zu nennen. Beispielsweise tritt bei der Synthese des Polyamids 46 als Nebenreaktion die Bildung des zyklischen Monoamins Pyrrolidin auf.

Die EP 0 184 594 beschreibt die Herstellung von Polyamiden aus primären Diaminen mit vier oder mehr Kohlenstoff-Atomen und Dicarbonsäurediarylestern mit sechs oder mehr Kohlenstoff-Atomen in der Kette. Die Verwendung von Dicarbonsäurediarylestern mit weniger als sechs Kohlenstoff-Atomen in der Kette wird allerdings nicht beschrieben.

Eine technische Darstellung eines Polyamids 44 ist in der Literatur nicht beschrieben. Lediglich in P. Dreyfuss, Journal of Polymer Science 1973, 201 - 216 wird die Herstellung des Polyamids 44 aus dem Säurechlorid der Bernsteinsäure und aus Diaminobutan beschrieben. Weiter wird dort beschrieben, dass dieses Polyamid einen Schmelzpunkt von 287 °C besitzt. Es wird allerdings nur eine Ausbeute von 29 % angegeben, die auf Nebenreaktionen wie z.B. die Bildung von N-substituierten Succinamiden aus Bernsteinsäure in der Gegenwart von Aminen zurückzuführen sein dürfte.

Der Erfindung liegt daher die Aufgabe zugrunde, die Nachteile des Stands der Technik zu überwinden und ein Verfahren zur Herstellung von Polyamid 44 oder einem modifizierten Polyamid 44 anzugeben, das in hohen Ausbeuten erhältlich ist. Eine weitere Aufgabe ist die Angabe eines Polyamids 44, das gegenüber dem Stand der Technik einen erhöhten Schmelzpunkt (zum Beispiel aufgrund einer geordneteren Struktur) aufweist.

Diese Aufgaben werden durch die unabhängigen Patentansprüche gelöst. Unteransprüche geben vorteilhafte Weiterbildungen an.

Das erfindungsgemäße Verfahren zur Herstellung von Polyamiden, die Einheiten der Struktur-CO-(CH₂)₂-CO und der Struktur-NH-(CH₂)₄-NH enthalten weist folgende Schritte auf:
(A) Bereitstellung eines Gemischs das einen Dicarbonsäureester der Bernsteinsäure, 0 bis 0,25 Moläquivalenten eines weiteren Dicarbonsäureesters (die Moläquivalente sind auf den Bernsteinsäure-Dicarbonsäureester bezogen) und das Diamin NH₂-(CH₂)₄-NH₂ (Diaminobutan) umfasst oder hieraus besteht,
(B) Durchführung einer ersten Kondensationsreaktion des mindestens einen Dicarbonsäureesters und des Diamins bei einer Temperatur von 100 bis 200 °C in Substanz (also ohne Zusatz eines Lösungsmittels) wobei ein Präpolymer erhalten wird,
(C) Durchführung einer zweiten Kondensationsreaktion des erhaltenen Präpolymers unter Abwesenheit von Sauerstoff bei einer Temperatur von 160 bis 240 °C und bei einem Druck kleiner 1 bar.

Unter einem Polyamid, das Einheiten der Struktur-CO-(CH₂)₂-CO- und der Struktur NH-(CH₂)₄-NH- enthält wird hierbei insbesondere ein Polymer verstanden, bei dem alternierend -CO-(CH2)₂-CO- und NH-(CH₂)₄-NH-Einheiten vorliegen. Bei Copolymeren, die auch Struktureinheiten enthalten, die auf den weiteren Dicarbonsäureester zurückzuführen sind, sind hierbei die -CO-(CH₂)₂-CO-Einheiten zum Teil durch diese Struktureinheiten ersetzt.

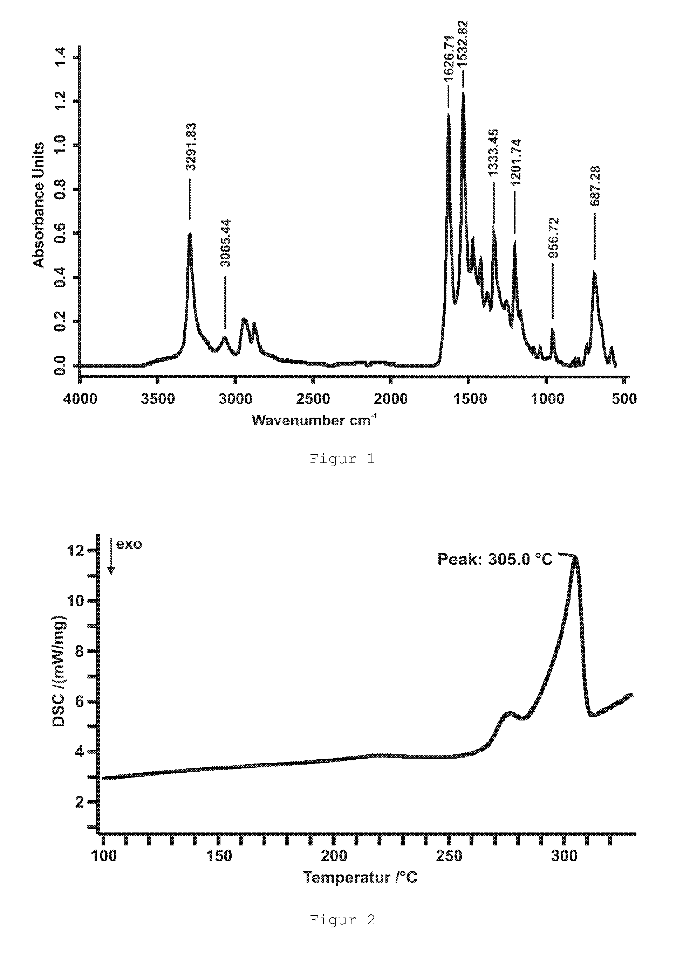

Die vorliegende Erfindung erlaubt die Herstellung von Polyamid 44 aus einem Dicarbonsäureester und einem Diamin unter milden Reaktionsbedingungen in einem Verfahren in zwei Schritten (die auch in Form einer Eintopf-Reaktion durchgeführt werden können). Durch den Einsatz von Bernsteinsäureestern, die insbesondere bei den gewählten Reaktionsbedingungen flüssig sind und die üblicherweise einen hohen Siedepunkt aufweisen (insbesondere einen Siedepunkt der über der Temperatur liegt, bei der der erste Polykondensationsschritt durchgeführt wird), ist es möglich, auf den Zusatz eines Lösungsmittels zu verzichten. Beispielsweise besitzt Bernsteinsäuredimethylester einen Siedepunkt von 200 °C und Bernsteinsäurediethylester einen Siedepunkt von 218 °C. Dagegen weist Bernsteinsäure einen Schmelzpunkt von 184 -186 °C auf. Überraschenderweise wurde festgestellt, dass bei diesem Verfahren die Bildung von Pyrrolidin, Succinimiden oder Imid-Ringen nicht oder nur in sehr geringem Umfang stattfindet. Dies ist beispielsweise aus den Infrarot-Spektren ersichtlich (vgl. Fig.1), die keine entsprechenden charakteristischen Banden aufweisen. Weiterhin wurde festgestellt, dass die gebildeten Polyamide eine erhöhte thermische Stabilität aufweisen.

In einer Ausführungsform der Erfindung wird die erste Kondensationsreaktion, bei der das Präpolymer erhalten wird (Vorkondensation) so durchgeführt, dass zumindest gegen Ende dieses Verfahrensschritts (also zumindest nach 75 bis 90 % der Zeit, die insgesamt für Verfahrensschritt (B) verwendet wird) der gebildete Alkohol abdestilliert wird. Sinnvollerweise wird daher der eingesetzte Bernsteinsäureester so gewählt, dass der bei der Kondensation gebildete Alkohol leicht abdestilliert werden kann - etwa mit Wasser als Kühlmittel für die Destillation. Werden bei der Kondensationsreaktion Alkohole gebildet, die höhere Siedepunkte haben, so ist es dennoch möglich, diese Alkohole abzudestillieren, wenn der Druck gegen Ende des Verfahrensschritts (B) herabgesetzt wird. Der Siedepunkt der gebildeten Alkohole sollte aber unter dem des eingesetzten Diamins liegen.
Auch die zweite Kondensationsreaktion (Nachkondensation des bei der Vorkondensation gebildeten Präpolymers) wird bevorzugt so durchgeführt, dass der bei der Kondensation gebildete Alkohol abdestilliert wird.

Für beide Kondensationsschritte (B) und (C) ist es daher sinnvoll, Carbonsäureester der Bernsteinsäure einzusetzen, aus denen bei der Kondensationsreaktion Alkohole mit einem Siedepunkt kleiner 140 °C, bevorzugt kleiner 120 °C, besonders bevorzugt kleiner 100 °C, entstehen. Als Dicarbonsäureester der Bernsteinsäure kommen daher insbesondere Methyl-, Ethyl-, n-Propyl- und/oder n-Butylester in Betracht. Entsprechendes gilt für den (bezogen auf den Bernsteinsäure-Dicarbonsäureester) in einer Menge von 0 bis 0,25 Moläquivalenten vorhandenen weiteren Dicarbonsäureester.

Die erste Stufe der Herstellung des erfindungsgemäßen Polyamids (Verfahrensschritt (B)) wird bei Reaktionstemperaturen im Bereich von 100 °C bis 200 °C, bevorzugt bei Reaktionstemperaturen im Bereich von 120 °C bis 190 °C und besonders bevorzugt bei Reaktionstemperaturen im Bereich von 140 °C bis 170 °C sowie bei einem Druck im Bereich von 0 bis 5 bar (absolut), bevorzugt im Bereich von 0 bis 3 bar, durchgeführt. Bevorzugt wird bei dieser Vorkondensation das Reaktionsgemisch intensiv gerührt, um den Transport der Monomere zu der wachsenden Polymerkette zu ermöglichen.

In einer weiteren Ausführungsform des erfindungsgemäßen Verfahrens wird Verfahrensschritt (B) solange durchgeführt, bis das entstandene Präpolymer ein mittels GelpermeationsChromatographie (GPC) ermitteltes Zahlenmittel der mittleren Molmasse (M_{N}) von 1000 - 3500 g/mol, bevorzugt 2000 - 3000 g/mol, und ein mittels GPC ermitteltes Gewichtsmittel der mittleren Molmasse (M_{W}) von 2500 - 5500 g/mol, bevorzugt 3000 - 5000 g/mol, aufweist. Das Präpolymer sollte dann im Mitte je etwa 10 - 20, bevorzugt etwa 12 - 17, auf das Diamin und den Dicarbonsäureester zurückzuführende Einheiten aufweisen.

Alternativ kann Verfahrenschritt (B) solange durchgeführt werden, bis das entstandene Präpolymer eine bestimmte spezifische inhärente Viskosität (gemessen mittels Lösungsviskosimetrie) aufweist. Diese Viskosität sollte 0,1 bis 0,2 dL/g bevorzugt 0,1 bis 0,15 dL/g betragen.

Die zweite Stufe des erfindungsgemäßen Verfahrens (d.h. die Nachkondensation beziehungsweise Verfahrensschritt (C)) erfolgt als Festphasenpolykondensation bei Temperaturen im Bereich von 160 °C bis 240 °C, bevorzugt im Bereich von 180 °C bis 200 °C und bei einem Druck von 0 bis 1 bar, bevorzugt von 0 bis 0,05 bar.
Weiterhin bevorzugt erfolgt die Nachkondensation in Vakuum oder unter Schutzgas (z.B. Stickstoff). Es ist zu vermuten, dass - falls im Verfahrensschritt (C) ohne Schutzgas bzw. ohne Vakuum gearbeitet wird - eine Zyklisierung des eingesetzten Diamins zu beobachten ist.
Ferner bevorzugt ist, bei der Nachkondensation für eine intensive Durchmischung zu sorgen, damit ein besserer Transport der Reaktionspartner zueinander ermöglicht wird.
Die Nachkondensation kann hierbei derart erfolgen, dass das in Verfahrensschritt (B) hergestellte Präpolymer ohne weitere Reinigung direkt eingesetzt wird; eine derartige Prozessführung ist insbesondere aus verfahrensökonomischen Gründen sinnvoll. Alternativ kann aber auch das Präpolymer nach Verfahrensschritt (B) gereinigt und isoliert werden und dann erst der Nachkondensation unterworfen werden; bei dieser Variante haben sich aber gegenüber der ersten Variante keine wesentlichen Unterschiede gezeigt.

In einer weiteren Ausführungsform wird zur Herstellung des erfindungsgemäßen Polyamids neben dem Bernsteinsäure-Dicarbonsäureester ein weiterer Dicarbonsäureester eingesetzt, so dass ein "modifiziertes Polyamid 44" erhalten wird. Dies führt bei dem durch die Kondensationsreaktion(en) erhaltenen Polyamid dazu, dass neben Struktureinheiten des Typs -CO-(CH₂)₂-CO- auch Struktureinheiten des Typs -CO-Z-CO- enthalten sind, wobei Z für eine Alkylen- oder Arylengruppe steht. Bevorzugte Alkylengruppen sind Linker mit 6 bis 12 Kohlenstoffatomen, insbesondere geradkettige Linker der genannten Kohlenstoffzahl; bevorzugte Arylengruppen sind Linker, die sich von Benzol, Biphenyl oder Naphthalin ableiten und zwei nicht benachbarte Carbonsäureester-Gruppen enthalten. Beispiele für derartige Dicarbonsäureester sind die Dicarbonsäureester der Adipinsäure, der Sebacinsäure, der Dodecandisäure, der Terephthalsäure, der Isophthalsäure, der Naphthalin-1,6-dicarbonsäure und der 4,4'-Diphenyldicarbonsäure.

Wird bei der Polyaddition des Diaminobutans mit dem Bernsteinsäure-Dialkylester ein weiterer der vorgenannten Alkylen- oder Arylendicarbonsäureester zugesetzt, so können die thermischen und mechanischen Eigenschaften des Polyamids 44 beeinflusst werden.
Der Zusatz von Alkylen-Dicarbonsäureestern führt zu einer Erniedrigung des Schmelzpunkts des Polyamids; wird also ein Polyamid benötigt, bei dessen Verarbeitung bei niedrigeren Temperaturen als dem Schmelzpunkt von reinem Polyamid 44 gearbeitet wird, so kann durch den Zusatz eines Alkylen-Dicarbonsäureesters der Schmelzpunkt gesenkt und das Verarbeitungsfenster erweitert werden.
Durch den Zusatz aromatischer Dicarbonsäureester wird der Schmelzpunkt - im Vergleich zu reinem Polyamid 44 - erhöht; zusätzlich wird die mechanische Stabilität erhöht. Wird also ein Werkstoff benötigt, für den die mechanische Stabilität (oder der Schmelzbereich) des Polyamid 44 nicht ausreicht, so kann bei der Polykondensation ein Dicarbonsäureester mit einem Arylenlinker zugesetzt werden.

Um dennoch die Eigenschaften des reinen Polyamids 44 weitgehend zu erhalten, wird der weitere Alkylen- oder Arylen-Dicarbonsäureester bezogen auf den Bernsteinsäure-Dicarbonsäureester im Unterschuss zugesetzt. Das Verhältnis n_{Bernsteinsäureester}/n_{weiterer Dicarbonsäureester} der eingesetzten Stoffmengen beträgt daher 100:0 bis 80:20. Bevorzugt beträgt dieses Verhältnis (sofern ein modifiziertes Polyamid benötigt wird) 95:5 bis 85:15.

Zur Beeinflussung der mechanischen Eigenschaften beziehungsweise des Schmelzpunkts kann statt dem weiteren Dicarbonsäureester auch ein Diamin mit der Formel NH₂-Z-NH₂ eingesetzt werden. Hierbei hat Z die entsprechende Bedeutung wie vorstehend. Allerdings ist es erfindungsgemäß bevorzugt die Dicarbonsäureester-Komponente zu variieren, da die Diamin-Komponente häufig im Überschuss eingesetzt wird und die Kondensationsreaktion - aufgrund des niedrigen Siedepunkts der Diamin-Komponente - weniger leicht zu einem modifizierten Polyamid 44 mit einem bestimmten Schmelzpunkt beziehungsweise bestimmten mechanischen Eigenschaften führt.

Die Diamin-Komponente, also im Regelfall das Diaminobutan, wird bezogen auf die Summe der Moläquivalente des Bernsteinsäure-Dicarbonsäureesters und des weiteren Dicarbonsäureesters in äquivalenter Menge oder im Überschuss eingesetzt. Ein Überschuss ist insbesondere dann vorteilhaft, wenn davon auszugehen ist, dass aufgrund der Reaktionsbedingungen (z.B. hohe Reaktionstemperaturen und/oder Unterdruck) neben dem bei der Kondensation gebildeten Alkohol auch das Diamin abdestilliert wird. Um unter solchen Bedingungen stets eine ausreichende Menge an Diamin im Reaktionsgemisch vorliegen zu haben, ist es vorteilhaft, die Diamin-Komponente im Überschuss einzusetzen. Wird die Diamin-Komponente im Überschuss eingesetzt, so ist es insbesondere sinnvoll 1,1 bis 2,5 Moläquivalente, bevorzugt 1,25 bis 1,5 Moläquivalente (bezogen auf die Summe der Dicarbonsäureester) an Diamin zuzusetzen.
Durch einen Überschuss der Diamin-Komponente kann auch beeinflusst werden, welche Endgruppen das gebildete Polymer enthält. Bei einem Überschuss an Diamin-Komponenten wird die Wahrscheinlichkeit erhöht, dass die gebildeten Polymerketten an beiden Enden eine Amin-Komponente aufweisen.

In einer weiteren Ausführungsform der vorliegenden Erfindung wird das Verfahren so durchgeführt, dass die eingesetzten Ausgangsmaterialien auf Basis nachwachsender Rohstoffe hergestellt werden. Beispielsweise kann Bernsteinsäure fermentativ hergestellt werden und wiederum chemisch in den Bernsteinsäure-Dicarbonsäureester bzw. in Diaminobutan umgewandelt werden. Die hierfür erforderlichen Reaktionen sind dem Fachmann aus Lehrbüchern bekannt und Standardwissen.

Das mit dem erfindungsgemäßen Verfahren gebildete Polyamid weist - insbesondere wenn es sich um reines Polyamid 44 handelt - einen Schmelzpunkt größer gleich 300 Grad Celsius, üblicherweise sogar größer gleich 305 Grad Celsius auf. Besonders bevorzugt ist der Schmelzpunkt des reinen Polyamids 44 ≥ 309 Grad Celsius. Enthält das gebildete Polyamid 44 auch Struktureinheiten des Typs -CO-Z-CO-, bei dem Z einen Alkylenlinker darstellt, so kann der Schmelzpunkt auch unter den angegebenen Werten liegen - dieses soll durch den Zusatz des korrespondierenden Dicarbonsäureesters ja auch erreicht werden. Der Schmelzpunkt eines derart modifizierten Polyamids beträgt üblicherweise zumindest 275°C, insbesondere beträgt er zumindest 280° C.

Weiterhin bevorzugt weist das gebildete Polyamid 44 (beziehungsweise das modifizierte Polyamid 44) eine gewichtsmittlere Molmasse (M_{W}) ≥ 6000 g/mol, besonders bevorzugt ≥ 12000 g/mol und ganz besonders bevorzugt ≥ 20000 g/mol auf. Die Polydispersität (d.h. der Quotient M_{W}/M_{N}) des gebildeten Polyamids beträgt bevorzugt zwischen 1 und 3, besonders bevorzugt 1 bis 2.

Aufgrund ihrer hohen mechanischen Belastbarkeit und ihres hohen Schmelzpunkts sind mögliche Verwendungen für Materialien, die aus Polyamid 44 (beziehungsweise modifizierten Polyamid 44) hergestellt sind Getriebeteile, Pumpenteile, Zahnräder, motornahe Bauteile, Polymermembranen, reißfeste Fasern und Ähnliches.

Ohne Einschränkung der Allgemeinheit wird die Erfindung nachfolgend anhand von Beispielen noch näher erläutert.

### Erfindungsgemäß werden die folgenden Messverfahren verwendet:

Die mittleren Molmassen der Polymere werden mittels Gelpermeations-Chromatographie (GPC) in 1,1,1,3,3,3-Hexafluorisopropanol (HFIP) ermittelt. Die Kalibrierung erfolgt mittels PMMA-Standards. Es wurden hierbei eine PFG-Vorsäule und zwei PFG-Säulen der Firma PSS (mittlere Partikelgröße 7µm, Porengröße von 1000 Å und 100 Å) verwendet.

Die Lösungsviskosimetrie erfolgt mittels eines Ubbelohde-Viskosimeters. Hierbei werden die Polymer-Proben in 96 %-iger Schwefelsäure bei 25 °C und einer Polymerkonzentration von 0,005 g/mol gemessen.

Der Schmelzpunkt der Polymeren wurde mittels Differential Scanning Calorimetry (DSC) unter einem schwachen Stickstoffstrom bestimmt. Die Aufheizrate wurde auf 20 K/min festgelegt. Als Probenbehälter wurden Aluminiumpfännchen verwendet.

### Beispiel 1 - Herstellung von Polytetramethylensuccinamid PA 44 auf Basis von Bernsteinsäure-Dimethylester.

Eine äquimolare Mischung aus Bernsteinsäure-Dimethylester und 1,4-Diaminobutan werden in einem Glasreaktor, ausgestattet mit einem KPG-Rührer, einem Destillationsaufsatz, einem Kühler, einem Vakuumvorstoß und einer Vorlage unter Stickstoff 90 Minuten bei 150 Grad Celsius gerührt. Das gebildete Polymer wird unter Stickstoff abgekühlt, in einer Soxhlet-Apparatur mit Ethanol extrahiert und unter Vakuum getrocknet. Die Ausbeute an gewonnenem Polymer beträgt 90 %.

Das erhaltene Polymer wurde durch FT-IR-Spektroskopie als Polytetramethylensuccinamid, PA 44 identifiziert. Das zugehörige Spektrum ist als Figur 1 abgebildet. Die charakteristischen Banden des PA 44 finden sich bei 3291 cm⁻¹ (Amid A), 3065 cm⁻¹ (Amid B), 1626 cm⁻¹ (Amid I), 1532 cm⁻¹ (Amid II), 1333 cm⁻¹ (Amid III), 956 cm⁻¹ (Amid IV) und 686 cm⁻¹ (Amid V).

Der Schmelzpunkt dieses PA 44 beträgt 305 °C - Figur 2 zeigt das zugehörige DSC-Spektrum. Das PA 44 besitzt eine inhärente Viskosität (IV) von 0,15 dL/g und hat eine weiße Farbe. Es besitzt eine zahlenmittlere Molmasse M_{N} von 2700 Gramm/Mol, eine gewichtsmittlere Molmasse M_{W} von 5000 Gramm/Mol und eine Polydispersität M_{W}/M_{N} von 1,87.

### Beispiel 2 - Herstellung von Polytetramethylensuccinamid auf Basis von Bernsteinsäure-Dimethylester mit Überschuss an Diaminobutan.

Analog Beispiel 1 wurde eine Mischung aus Bernsteinsäure-Dimethylester (50,0 g - 0,34 mol) und 1,4-Diaminobutan (44,0 g - 0,5 mol) in einem Glasreaktor, ausgestattet mit einem KPG-Rührer, einem Destillationsaufsatz, einem Kühler, einem Vakuumvorstoß und einer Vorlage unter Stickstoff 90 Minuten bei 150 °C gerührt. Das gebildete Polymer wird unter Stickstoff abgekühlt und in einer Soxhlet-Apparatur mit Ethanol extrahiert und unter Vakuum getrocknet. Die Ausbeute an gewonnenem Polymer beträgt 85 %.

Der Schmelzpunkt des PA 44 beträgt 309 °C; es hat eine inhärente Viskosität (IV) von 0,11 dL/g. Das Polymer hat eine weiße Farbe; es besitzt eine zahlmittlere Molmasse von 2400 g/mol, eine gewichtsmittlere Molmasse von 4000 g/mol und eine Polydispersität von 1,69.

### Beispiel 3 - Herstellung von Polytetramethylensuccinamid auf Basis von Bernsteinsäure-Diethylester.

Analog Beispiel 1 wird eine äquimolare Mischung aus Bernsteinsäure-Diethylester und 1,4-Diaminobutan in einem Glasreaktor unter Stickstoff 90 Minuten bei 150 °C gerührt. Das gebildete Polymer wird unter Stickstoff abgekühlt und in einer Soxhlet-Apparatur mit Ethanol extrahiert und im Vakuum getrocknet. Die Ausbeute beträgt 85 %.

Der Schmelzpunkt des PA 44 beträgt 305 °C; es weist eine inhärente Viskosität (IV) von 0,11 dL/g auf. Das Polymer hat eine weiße Farbe und besitzt eine zahlmittlere Molmasse von 2500 g/mol, eine gewichtsmittlere Molmasse von 4000 g/mol und eine Polydispersität von 1,59.

### Beispiel 4 - Herstellung Polytetramethylensuccinamid auf Basis von Bernsteinsäure-Diethylester mit einem Überschuss an Diaminobutan.

Eine Mischung aus Bernsteinsäure-Diethylester (50,0 g - 0,3 mol) und 1,4-Diaminobutan (35,3 g - 0,4 mol) wird in einem wie vorstehend beschriebenen Glasreaktor unter Stickstoff 2,5 Stunden bei 150 °C gerührt. Das gebildete Polymer wird unter Stickstoff abgekühlt und in einer Soxhlet-Apparatur mit Ethanol extrahiert sowie unter Vakuum getrocknet. Die Ausbeute beträgt 90 %.

Der Schmelzpunkt des PA 44 beträgt 305 °C; es hat eine inhärente Viskosität (IV) von 011 dL/g. Das gebildete Polyamid hat eine zahlmittlere Molmasse von 2300 g/mol, eine gewichtsmittlere Molmasse von 2800 g/mol und eine Polydispersität von 1,23.

### Beispiel 5 - Festphasen-Polykondensation des erhaltenen Polyamids

15 g eines nach dem Beispiel 1 bis 4 hergestellten Polytetramethylensuccinamids werden in einem Glasreaktor unter Vakuum bei 180 °C für zwei Stunden nachkondensiert (alternativ können die in dem Beispielen 1 bis 4 erhaltenen Polyamide auch direkt - das heißt ohne Extraktion im Soxhlet-Extraktor eingesetzt werden). Das bei der Nachkondensation erhaltene Polymer wird im Soxhlet-Extraktor extrahiert; es weist eine inhärente Viskosität von 0,4 dL/g, eine zahlmittlere Molmasse von 3000 g/mol, eine gewichtsmittlere Molmasse von 6000 g/mol und eine Polydispersität von 1,97 auf.

### Beispiel 6 - Herstellung von Polytetramethylensuccinamid -Co-Tetramethylen-Adipamid auf Basis von Bernsteinsäure-Dimethylester und Adipinsäure-Diethylester mit Überschuss an Diaminobutan.

Eine Mischung an Bernsteinsäure-Dimethylester (40,0 g - 0,23 mol) Adipinsäure-Diethylester (10,0 g - 0,05 mol) und 1,4-Diaminobutan (44,0 g - 0,5 mol) wird in einem Glasreaktor nach den Beispielen 1 bis 4 unter Stickstoff 90 Minuten bei 150 °C erhitzt. Das gebildete Polymer wird unter Stickstoff abgekühlt und in einer Soxhlet-Apparatur mit Ethanol extrahiert und im Vakuum getrocknet.

## Patentansprüche

1. Verfahren zur Herstellung von Polyamiden, die Einheiten der Struktur -CO-(CH₂)₂-CO- und der Struktur -NH-(CH₂)₄-NH- enthalten, mit folgenden Schritten
(A) Bereitstellung eines Gemischs umfassend einen Dicarbonsäureester der Bernsteinsäure, 0-0,25 Moläquivalenten (bezogen auf den Dicarbonsäureester der Bernsteinsäure) eines weiteren Dicarbonsäureesters und des Diamins NH₂-(CH₂)₄-NH₂,
(B) Durchführung einer ersten Kondensationsreaktion der Dicarbonsäureester und des Diamins bei einer Temperatur von 100-200 °C in Substanz wobei ein Präpolymer erhalten wird,
(C) Durchführung einer zweiten Kondensationsreaktion des Präpolymers unter Abwesenheit von Sauerstoff bei einer Temperatur von 160 °C - 240 °C und bei einem Druck < 1 bar.

2. Verfahren nach Anspruch 1,
**dadurch gekennzeichnet, dass** Verfahrensschritt (B) so durchgeführt wird, dass zumindest gegen Ende des Verfahrensschritts der bei der Kondensation gebildete Alkohol abdestilliert wird.

3. Verfahren nach einem der vorhergehenden Ansprüche,
**dadurch gekennzeichnet, dass** Verfahrensschritt (C) so durchgeführt wird, dass der bei der Kondensation gebildete Alkohol abdestilliert wird.

4. Verfahren nach einem der vorhergehenden Ansprüche,
**dadurch gekennzeichnet, dass** als Dicarbonsäureesters der Bernsteinsäure und/oder des weiteren Dicarbonsäureesters ein Methyl-, Ethyl-, Propyl-und/oder Butylester verwendet wird.

5. Verfahren nach einem der vorhergehenden Ansprüche,
**dadurch gekennzeichnet, dass** Verfahrensschritt (B) bei einer Temperatur von 100-200 °C, bevorzugt 120-190° C, besonders bevorzugt 140-170 °C, und bei einem Druck von 0-5 bar, bevorzugt 0-3 bar, durchgeführt wird.

6. Verfahren nach einem der vorhergehenden Ansprüche,
**dadurch gekennzeichnet, dass** Verfahrensschritt (B) so lange durchgeführt wird, bis das entstandene Präpolymer zahlenmittlere Molmasse M_{N} von 1700 - 3500 g/mol, bevorzugt 2000 - 3000 g/mol aufweist.

7. Verfahren nach einem der vorhergehenden Ansprüche,
**dadurch gekennzeichnet, dass** Verfahrensschritt (B) so lange durchgeführt wird, bis das entstandene Präpolymer eine inhärente Viskosität von 0,1 bis 0,2 dL/g, bevorzugt von 0,1 bis 0,15 dL/g besitzt.

8. Verfahren nach einem der vorhergehenden Ansprüche,
**dadurch gekennzeichnet, dass** Verfahrensschritt (C) bei einer Temperatur von 160-240 °C, bevorzugt 180-200°C, und bei einem Druck von 0-1 bar, bevorzugt 0-0,05 bar, durchgeführt wird.

9. Verfahren nach einem der vorhergehenden Ansprüche,
**dadurch gekennzeichnet, dass** das Polyamid neben Einheiten der Struktur -CO-(CH₂)₂-CO- auch Einheiten der Struktur -CO-Z-CO- enthält, wobei Z für eine Alkylen- oder Arylengruppe steht und in Verfahrensschritt (A) als weiterer Dicarbonsäureester ein Alkylen oder Arylen-Dicarbonsäureester bereitgestellt wird.

10. Verfahren nach einem der vorhergehenden Ansprüche
**dadurch gekennzeichnet, dass** in Verfahrensschritt (A) bezogen auf die Summe der Moläquivalente des Bernsteinsäuredicarbonsäureesters und des weiteren Dicarbonsäureesters das Diamin NH₂-(CH₂)₄-NH₂ in äquivalenter Menge oder im Überschuss eingesetzt wird.

11. Verfahren nach einem der vorhergehenden Ansprüche,
**dadurch gekennzeichnet, dass** der als Ausgangsmaterial eingesetzte Bernsteinsäureester und/oder das eingesetzte Diamin der Formel NH₂-(CH₂)₄-NH₂ aus nachwachsenden Rohstoffen erhalten wurde.

12. Polyamid, erhältlich durch das Verfahren nach einem der vorhergehenden Ansprüche mit einem Schmelzpunkt ≥ 300°C, bevorzugt ≥ 305°C.

13. Polyamid nach dem vorhergehenden Anspruch,
**dadurch gekennzeichnet, dass** das Gewichtsmittel der Molmasse des Polyamids ≥ 6000 g/mol ist.

14. Polyamid nach einem der beiden vorhergehenden Ansprüche,
**dadurch gekennzeichnet, dass** die Polydispersität des Polyamids einen Wert zwischen 1 und 3 aufweist.

15. Verwendung eines Polyamids nach einem der drei vorhergehenden Ansprüche für Getriebeteile, Pumpenteile, Zahnräder, motornahe Bauteile, Polymermembranen und reißfeste Fasern.
